# EUROPEAN PATENT SPECIFICATION

(11) **EP 4 343 482 B1**
(45) Date of publication and mention of the grant of the patent: **24.12.2025**
(21) Application number: 22197580.8
(22) Date of filing: 23.09.2022
(51) Int. Cl.: G05D 16/04, G05D 16/10, G05D 16/20

(54) **PRESSURE REGULATION SYSTEMS AND VALVES**
DRUCKREGELUNGSSYSTEME UND VENTILE
SYSTÈMES ET VANNES DE RÉGULATION DE PRESSION

(43) Date of publication of application: 27.03.2024
(73) Proprietor: Microtecnica S.r.l., 10126 Turin (IT)
(72) Inventor: CAPPO, Matteo, 10129 Torino (IT); MORNACCHI, Andrea, 10126 Torino (IT); QUAGLIA, Enrico, 10023 Torino (IT)
(74) Representative: Casalonga

(56) References cited:
- US-A- 2 919 714
- US-A1- 2017 336 812

## Description

The invention relates to pressure regulation systems and valves, more particularly to bleed air pressure regulation systems for aircraft anti-icing systems.

### Background

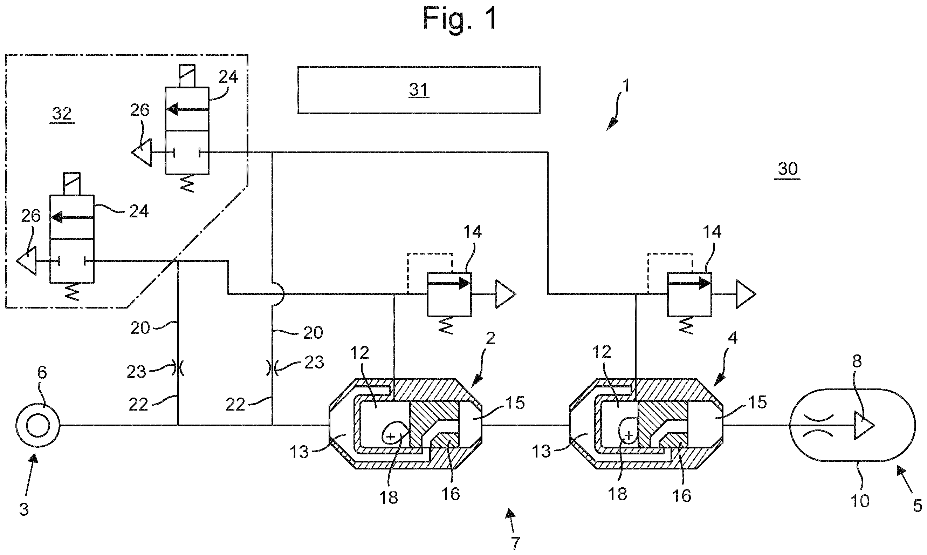

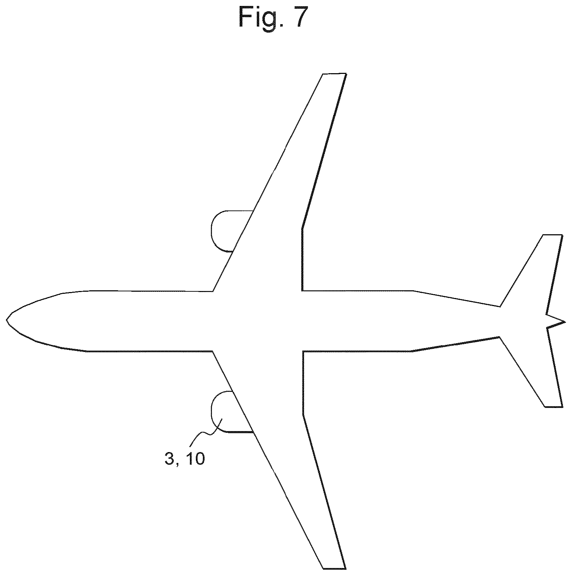

Conventional bleed air pressure regulation systems 1 for aircraft anti-icing systems 5 (e.g., as shown in Fig. 1) comprise a first, upstream pressure regulating valve 2 and a second, downstream pressure regulating valve 4 arranged in series between a fluid inlet 6 and a fluid outlet 8 in a fluid flow path 7 (e.g., a gas turbine engine 3 bleed air flow path 7 exhausting hot gases to a volume within a nacelle 10 as shown in Figs. 1 and 7). The second pressure regulating valve 4 is provided as a redundancy. The respective pressure regulating valves 2,4 each have a regulating pressure chamber 12 in fluid communication with a respective pressure setting valve 14 (e.g., pressure relief valves which vent to an ambient environment 30 when a set or threshold pressure is achieved).

When in an open position (e.g. a regulated position), pressure regulating valves 2, 4 act to maintain the pressure at an output or valve outlet 15 constant, regardless of the pressure variation at an input or valve inlet 13. Pressure regulation is achieved by laminating the air flow through a variable metering area located between the valve inlet 13 and the valve outlet 15 (e.g. through a fluid pathway between the valve inlet 13 and the valve outlet 15). The metering area is defined by the balance of the pressures acting on a piston 16. The pressure in the pressure regulating or control chamber 12 acts by increasing the metering area resulting in an increase in the pressure at the valve outlet 15. An increase in the pressure at the valve outlet 15 (e.g., in an outlet chamber 15) beyond the required value causes a reduction of the metering area, in turn causing a reduction of the output pressure from the pressure regulating valve 2, 4.

Also within each pressure regulation chamber 12 is a manual override that can be used to exclude the pressure regulating valves 2,4 in case of malfunction (e.g., to force open the first pressure regulating valve 2 so that the second pressure regulating valve 4 can act independently). The manual override comprises a cam 18 that can be rotated to push the pressure regulating valve (e.g., push the piston 16) towards an override open position (e.g., a non-regulated open position). For illustrative purposes only, Fig. 1 shows the first pressure regulating valve 2 in the override open position and the second pressure regulating valve 4 in the closed position.

Each pressure setting valve 14 is in fluid communication with an inlet (e.g., a fluid inlet such as a bleed air inlet 6) upstream of the first, upstream pressure regulating valve 2 by respective sense lines 20 (e.g. pressure tap lines) comprising feed orifices 22 in direct communication with the fluid inlet 6. The sense lines 20 fluidly communicate the pressure at the fluid inlet 6 with the regulating pressure chambers 12. The pressure setting valves 14 are each pre-set to a threshold value of the regulated pressure required at the valve outlet 15. When the threshold of pressure is exceeded (e.g., when the pressure in the sense lines 20 and regulating pressure chamber 12 exceed the threshold pressure) the pressure setting valves 14 open to release gas (e.g., hot bleed gases) from the sense lines 20 and the regulating pressure chamber 12 to the ambient. When the sense line 20 of a pressure regulating valve 2,4 is vented in this way, the pressure at the output 15 will momentarily exceed the pressure in the regulating pressure chamber 12, and the piston 16 will momentary move towards to a new equilibrium position, defining a new metering area and then cause a reduction of the pressure at the output 15. Thusly, the pressure of the pressure regulating valves 2,4 are regulated to the threshold value.

Each feed orifice 22 of the respective sense lines 20 comprises a flow restriction means 23 such as a throttle valve or other restriction. The flow restriction means 23 serves to control or limit the flow of bleed air into the sense line 20. Limiting or reducing the flow with the flow restriction means 23 is believed to reduce the responsiveness of the pressure regulating valves 2,4. However, increasing the flow through the sense lines 20 would undesirably result in an increased amount of gases (e.g., hot gases) vented by the pressure setting valves 14 when the maximum pressure is reached. Therefore, a certain trade-off between responsiveness of the system 1 and the undesirable venting of gases through the pressure setting valves 14 is present when selecting and/or configuring the flow restriction means 23.

To shut off the supply of bleed air, solenoid or dump valves 24 (2-way open/closed solenoid valves) are connected to each of the respective sense lines 20 in parallel to respective the regulating pressure chambers 12. The solenoid valves 24 are biased to a closed position and can be engaged so as to open by providing current to electromagnetic coils as is known in the art. The solenoid valves 24 can be opened in order to effectively vent the pressure regulating valves 2,4 (e.g., vent the pressure in the sense lines 20, pressure setting valves 14 and regulating pressure chambers 12) to ambient, which will allow the pressure regulating valves 2,4 to move to a closed position (e.g., inlet pressure communicated to the output 15 of each pressure regulating valve 2,4 pushes the piston 16 to a closed position) thereby preventing flow of bleed air therethrough.

In order to effectively vent the pressure regulating valves 2,4, the solenoid valves 24 must be provided with oversized venting orifices 26 which accommodate a much larger rate of flow than is provided through the feed orifices 22 and the flow restriction means 23, thusly allowing the sense lines 20 to be depressurised whilst still being in fluid communication with the fluid inlet 6. The solenoid valves 24, the feed orifices 22 and the flow restriction means 23 are therefore sized interdependently, as a larger flow through the feed orifice 22 requires a larger and more oversized solenoid valve 24. Another trade-off is therefore established between responsiveness of the system 1 and the undesirable venting of hot gases through the solenoid valves 24 when the supply of bleed air is shut off.

Unlike the operation of the pressure setting valves 14, which open periodically to release gas in order to regulate pressure to a maximum output pressure, the solenoid valves 24 must be continually engaged so as to continually vent the feed orifices 22 of the sense lines 20. In this position, the solenoid valves 24 continually discharge gases (e.g., hot gases) to the surroundings. The rate at which gases (e.g., hot gases) are vented by the solenoid valves 24 will therefore be greater than the rate at which gases are vented from the pressure setting valves 14. Continual engagement of the solenoid valves 24 also causes them to heat up undesirably due to a flow of electrical current in their electromagnetic coils (as is known in the art). The oversizing of the solenoid valves 24 also undesirably increases the weight of the system, and further increases heating produced by the correspondingly oversized coils.

In order to prevent undesirable heating of coils of the solenoid valves 24, the pressure regulating valves 2,4 or the surrounding architecture 31 (which is known cause of degradation of performance and/or failure), the solenoid valves 24 must be positioned at a remote location 32 from the pressure regulating valves 2,4 and pressure setting valves (e.g., several metres away, such as 0.5-5 metres from the pressure regulating valves 2,4). This increases the length of the sense lines 20 and the dead volume within the system 1. The dead volume, which also includes the volume of the oversized solenoid valves 24, increases the effective volume of the regulating pressure chambers 12 and decreases stability and the responsiveness of the system 1, which can lead to increased and accelerated wear and unwanted oscillations of the controlled pressure
Thus, there remains a need for improved pressure regulation systems and pressure regulating valves. US2919714 and US2017/0336812 disclose arrangements cited in the European search report.

### Summary

In an aspect a pressure regulating system is provided according to claim 1.

In another aspect a method of regulating a pressure of gas for an aircraft bleed air anti-icing system is provided according to claim 9.

In any of the system or method, the regulating piston may be configured to move from a closed position to an open position, the closed position fluidly isolating the valve inlet from the valve outlet, and the open position fluidly connecting the valve inlet to the valve outlet, wherein the chamber has a closed volume when the regulating piston is in the closed position. A manual override cam may be positioned within the chamber, the manual override cam having a manual override volume which substantially fills or overlaps the closed volume of the regulating pressure chamber.

Positioning a solenoid valve (e.g., a three-way solenoid valve) in series between the sense line and the chamber allows for the sense line to be disconnected from the chamber when the solenoid switches to the second position to vent the chamber. In this way the solenoid valve need only be sized to vent gas within the chamber and pressure setting valve and, when engaged, the solenoid need not continuously vent gasses from the sense line. As gasses (e.g., hot gasses bled from a gas turbine engine) are not continuously vented from the sense line, heating of the system and surrounding architecture is reduced (e.g., as compared with conventional systems of the type described previously). A relatively smaller solenoid valve can also be employed with, for example, correspondingly smaller electromagnetic coils (e.g., as compared with conventional systems of the type described previously). Heating is further reduced due to the relatively smaller solenoid valves having correspondingly lower resistive heat losses, e.g., when their electromagnetic coils are engaged.

Providing a manual override cam which substantially fills the chamber reduces the dead volume within the chamber (e.g., as compared with a conventional valve wherein the cam does not substantially fill the chamber). Reducing the dead volume in this way leads to a reduced rate of wear and reduces unwanted oscillations of the controlled pressure.

The following optional features may be applied to any of the above aspects.

The manual override volume may comprise a stroke volume of the cam and the stroke volume may be arranged to fill or overlap at least 70%, at least 80% or at least 90% of the closed volume of the regulating pressure chamber.

The manual override volume may comprise a volume of the cam and the volume of the cam may fill or overlap at least 30%, at least 40%, at least 50%, at least 60% or at least 700% of the closed volume of the regulating pressure chamber.

The pressure setting valve and/or the solenoid valve may be integrated into a or the body of the pressure regulating valve.

Integrating the pressure setting valve and/or the solenoid valve into the valve body reduces the dead volume of the pressure regulation system or valve. Reducing the dead volume in this way leads to a reduced rate of wear and reduces unwanted oscillations of the controlled pressure. The integration of the solenoid valve into the valve body may be facilitated, at least in part, by the positioning of the solenoid valve between the sense line and the chamber which reduces heating as aforementioned.

The sense line may be directly connected to an inlet chamber of a or the body of the pressure regulating valve. This further reduces the dead volume of the system or valve as compared with a conventional system where a sense line may be separately communicated with a fluid inlet.

The sense line may comprise a flow restriction means.

The pressure regulating valve may be a first pressure regulating valve. A or the pressure regulation system may further comprise a fluid inlet (e.g. a system inlet communicated with a supply of bleed gasses), a fluid outlet (e.g., a system outlet communicating pressure regulated bleed gasses to an aircraft anti-icing system), and a second pressure regulating valve (which may comprise a second valve body) including a second valve inlet and a second valve outlet, a second regulating piston positioned in a fluid pathway between the second valve inlet and the second valve outlet, a second chamber in fluid communication with the second regulating piston, a second pressure setting valve in fluid communication with the second chamber, the second pressure setting valve being configured to vent gas to the ambient environment when a pressure within the second chamber exceeds a second threshold value, and a second solenoid valve in fluid communication with the second chamber. The body of the first pressure regulating valve and the body of the second pressure regulating valve may be arranged in series in a fluid flow path between the fluid inlet and the fluid outlet. The sense line may additionally fluidly communicate the valve inlet (e.g., the inlet of the first valve) with the second solenoid valve. The second solenoid valve may be configured to move from a first position to a second position, the first position fluidly connecting the second chamber with the sense line, and the second position fluidly connecting the second chamber to the ambient environment.

A or the method for regulating pressure or operating the system or valve may further comprise: providing a second pressure regulating valve, comprising a second regulating piston in fluid communication with a second regulating chamber, the second regulating chamber being fluidly coupled with a second pressure setting valve configured to vent gas to the ambient environment when a pressure within the second regulating chamber exceeds a second threshold value, wherein the first pressure regulating valve and the second pressure regulating valve are arranged in series in a fluid flow path between the inlet and the outlet; and providing a second solenoid valve positioned in series between the sense line and the second regulating chamber, wherein the second solenoid valve is configured to move from a first position fluidly connecting the second regulating chamber with the sense line, and a second position fluidly connecting the second regulating chamber to the ambient environment.

Providing a second set of regulating pistons, pressure setting valves and solenoid valves provides redundancy in the event of failure (e.g., a fail-open event) of one of the pressure regulating architectures.

The threshold value (e.g., the threshold value of the first valve) and the second threshold value may be different from each other. The second threshold value may be higher than the (first) threshold value.

Offsetting the threshold values in this way may ensure that only one of the pressure regulating architectures (e.g., a first of the regulating pistons and pressure setting valves) is in active operation at any one time. For example, when a threshold value of a first upstream pressure setting valve is lower than a second threshold value of second downstream pressure setting valve, then, during normal operation, only the first pressure setting valve may be routinely actuated to vent gasses to the ambient. In this way oscillations and wear on the second of the pressure regulating architectures (e.g., a second of the regulating pistons and pressure setting valves) is greatly reduced when compared with systems wherein both the threshold value and second threshold value are equivalent..

The method may further comprise moving the first solenoid valve to the second position to stop a flow of gas from the inlet to the outlet.

The method may further comprise moving the first solenoid valve and/or the second solenoid valve to their respective second positions to stop a flow of gas from the inlet to the outlet.

### Figures

Fig. 1 shows a schematic of a conventional pressure regulation system for an aircraft anti-icing system.
Fig. 2 shows a schematic of a pressure regulation system for an aircraft anti-icing system.
Fig. 3 shows a cross-section of a pressure regulating valve in a closed position (corresponding to section line 3-3 in Fig.4).
Fig. 4 shows a cross-section of the pressure regulating valve of Fig. 3 along section line 4-4.
Fig. 5 shows a perspective view of the pressure regulating valve of Figs. 3 and 4.
Fig. 6 shows a perspective view of the pressure regulation system of Fig. 2.
Fig. 7 shows an aircraft including a gas turbine engine and nacelle.

### Detailed description

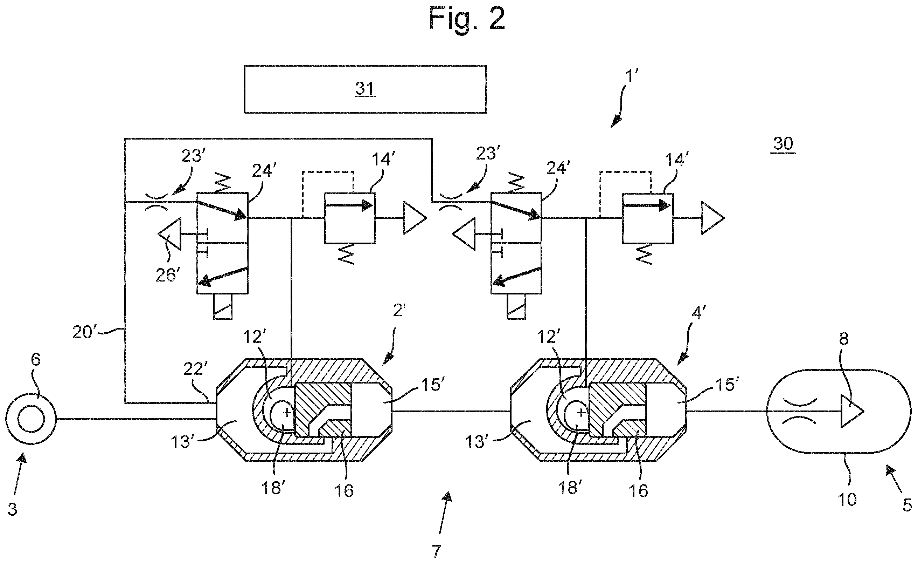

Embodiments of a pressure regulation system 1' and pressure regulating valves 2',4' will now be described with reference to Figs. 2-6. For ease of reference, like reference numerals are employed to denote features with essentially the same function as described previously. That is to say that, unless signified to the contrary in the below text, the features already described in relation to Fig. 1 may be applied to the embodiments of Figs. 2-6. For example, the piston 16 of embodiments of the invention may act to laminate the flow through a variable metering area exactly as previously described.

An improved pressure regulation system 1' (e.g., a bleed air pressure regulation system for aircraft anti-icing systems 5) is shown in Fig. 2. As with the already described system 1, the pressure regulation system 1' may comprise a first, upstream pressure regulating valve 2' and a second, downstream pressure regulating valve 4' arranged in series between a fluid inlet 6 and a fluid outlet 8 in a fluid flow path (e.g., a gas turbine engine 3 bleed air flow path 7 exhausting hot gases to a volume within a nacelle 10). The invention is not limited to using two valves, and the pressure regulation system may comprise only a single pressure regulating valve 2',4', for example.

Each pressure regulating valve 2',4' has a regulating pressure chamber 12' in fluid communication with a respective pressure setting valve 14'. Each pressure regulation chamber 12' may include a manual override means such as a cam 18' which can be rotated to move a movable valve member (e.g., a piston 16 or a diaphragm) to an open position. as previously described, pressure within the regulating pressure chambers 12' may act to move the respective pressure regulating valves 2',4' to an open position by, for example, moving a piston 16 or a diaphragm so as to open a fluid pathway through the pressure regulating valve 2',4'. In this way, pressure from an input or valve inlet 13' of each pressure regulating valves 2',4' is communicated to an output or valve outlet 15' of each pressure regulating valves 2',4'.

The pressure regulation system 1' may comprise a solenoid or dump valve 24' (e.g., 3-way solenoid valve) positioned in series between the sense line 20' and the regulating pressure chamber 12' of each respective pressure regulating valve 2',4'. The solenoid valve may be configured to move from a first position wherein the regulating pressure chamber 12' is fluidly connected to the sense line 20' (as shown in Fig. 2) and a second position wherein the regulating pressure chamber 12' is not fluidly connected to the sense line 20' (not shown). In the second position, the regulating pressure chamber 12' may fluidly connected to a venting orifice 26' of the solenoid valve 24'. The solenoid valve 24' may be biased to the first position in a resting or non-engaged state and may be engaged so as to move to the second position by providing current to electromagnetic coils as is known in the art.

To shut off the supply of bleed air, one or more solenoid valves 24' are engaged so as to move to the second position to vent a respective pressure regulating valve 2',4'. In contrast to the previously described system 1, venting the respective pressure regulating valve 2',4' only requires the venting of the pressure volume defined by the solenoid 24', the setting valve 14' and regulating pressure chamber 12' to ambient that is lower than the conventional system 1. Advantageously, the initial volume of gases to be vented is greatly reduced (e.g., the dead volume provided in the sense lines 20' do not need to be vented) and, as the supply of bleed air is cut, hot gases are not continuously vented to ambient.

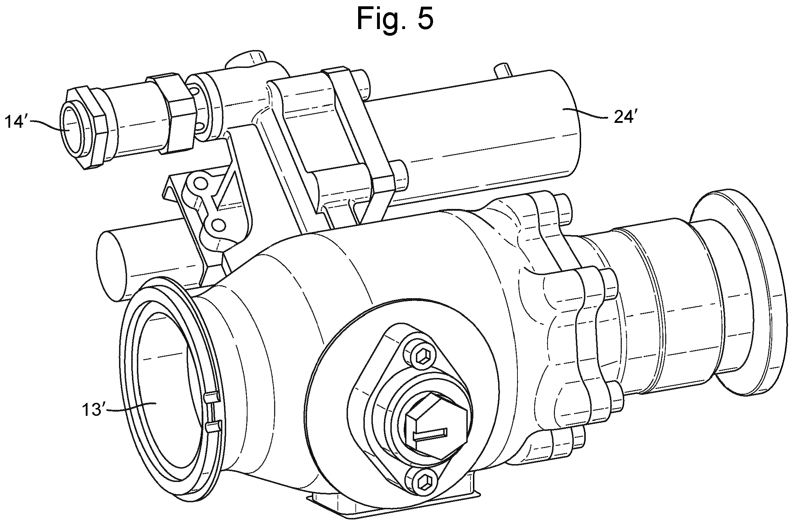

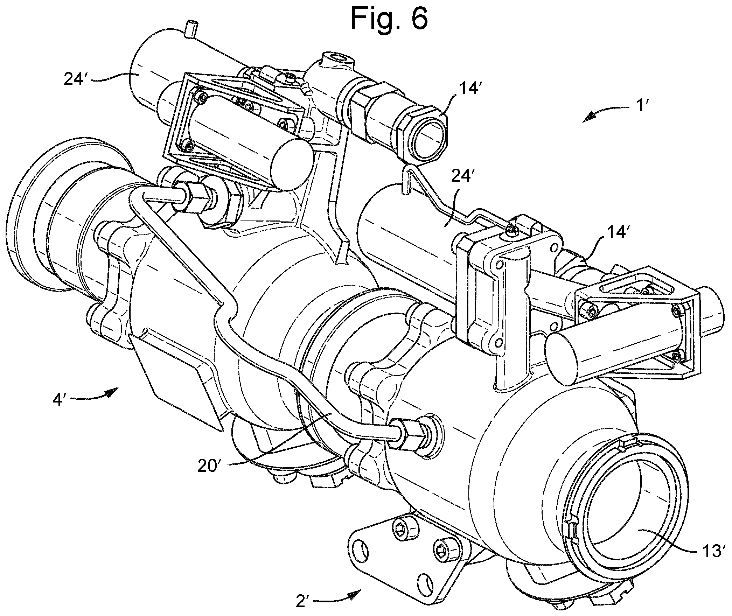

Accordingly, the solenoid valve(s) 24' do not need to be oversized. Stated differently, each solenoid valve 24' need only be sized, designed, selected or configured to vent the regulating pressure chamber 12' alone and not to continuously vent a supply of gases from the sense line. As the solenoid valve 24' does not continuously vent gases (e.g., hot gases), it does not need to be positioned remotely from the pressure regulating valves 2',4' to avoid undesirable heating of the pressure regulating valves 2',4' or the surrounding architecture 31. Positioning a solenoid valve 24' proximate to the respective pressure regulating valve 2',4' may serve to greatly reduce the dead volume of the system, thereby improving the stability and responsiveness of the pressure regulating valves 2',4'. Indeed, as discussed further below, the solenoid valve 24' may be integrated into the pressure regulating valve 2',4' (e.g., integrated in to a valve body of the pressure regulating valve 2',4' as shown in Figs. 5 and 6).

The selection and configuration of the solenoid valve 24' is thusly decoupled from the sense line 20', as these features are not interdependent due to the disconnection of the sense line 20 in the second position (e.g., in contrast to the conventional system 1). The solenoid valves 24' may therefore be smaller than the solenoid valves 24 of a conventional system described previously. Using smaller solenoid valves 24' may advantageously reduce the weight of the system 1' and further reduce valve heating or heat loss to the ambient due to correspondingly smaller electromagnetic coils. The reduction in heating of the solenoid valve 24' (e.g., a relatively smaller solenoid valve compared with solenoid valves 24 required in conventional systems 1) means that it does not adversely affect the pressure regulating valves 2',4' (e.g., the rate of wear, stability and responsiveness of the pressure regulating valves 2',4' is not adversely affected). Accordingly, the solenoid valves 24' need not be separated from the pressure regulating valves 2',4' and may instead be integrated into the pressure regulating valves 2',4'. Integrating the solenoid valves 24' into the pressure regulating valves 2',4' further reduces the dead volume thereby improving the stability and responsiveness of the pressure regulating valves 2',4'.

With reference to Figs. 2 and 6, the sense lines 20' may be in direct communication with the input or valve inlet 13' of the first pressure regulating valve 2' instead of being in direct communication with the fluid inlet 6. Stated differently, the sense lines 20' may be connected to the input 13' of the first pressure regulating valve 2' (e.g., an inlet chamber 13' in the pressure regulating valve 2', positioned upstream of a movable valve member such as a piston 16 or a diaphragm). The sense lines 20' may comprise a common sense line 20' fluidly connecting both solenoid valves 24' in parallel via a single feed orifice 22'. Each solenoid valve 24' may comprise a respective flow restriction means 23'. Additionally or alternatively, a common flow restriction means may be employed upstream of both solenoid valves 24' (not shown). Integrating the sense lines of the two pressure regulating valves 2',4' in this way may serve to reduce the dead volume of the system upstream of the regulating pressure chambers 12' thereby increasing the speed at which upstream pressure changes (e.g., from the fluid inlet 6) are communicated to the regulating pressure chambers 12', and increasing the responsiveness and stability of the system 1'.

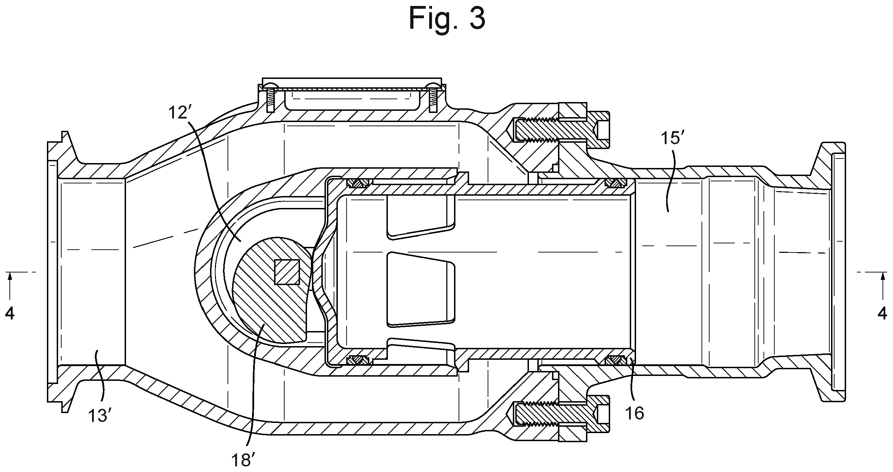

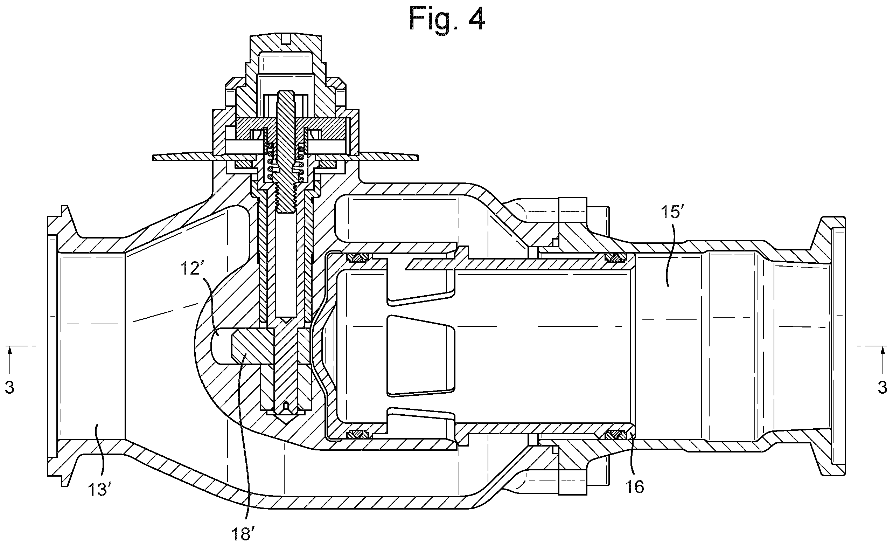

With reference to Figs. 3 and 4, embodiments of the pressure regulating valves 2',4' may comprise a reduced volume regulating pressure chamber 12'. The pressure regulating chamber 12' may be sized to as to be complimentary to a stroke volume of the manual override cam 18'. In particular, pressure regulating valves 2',4' may comprise a regulating pressure chamber 12' sized so as to tightly accommodate the stroke volume of the cam 18'. That is, the cam 18' may be rotated through a volume within the regulating pressure chamber 12' (a stroke volume) and the stroke volume may substantially fill or overlap a closed volume of the regulating pressure chamber 12' (e.g., the stoke volume may fill or overlap with at least 70%, at least 80% or at least 90% a volume of the regulating pressure chamber 12' when the piston 16 is in the closed position). Stated differently, the cam 18' may be rotated through substantially a closed volume of the regulating pressure chamber 12' (e.g., a volume of the regulating pressure chamber 12' when the piston 16 is in the closed position).

A volume of the cam itself may, additionally or alternatively, may substantially fill or overlap the closed volume of the regulating pressure chamber 12' (e.g., the cam volume (including any fixings) may comprise at least 30%, at least 40% or at least 50% of a volume of the regulating pressure chamber 12' when the piston 16 is in the closed position).

Providing a regulating pressure chamber 12' sized so as to tightly accommodate the cam 18', or the stroke volume of the cam 18', serves to reduce the dead volume within the pressure regulating valves 2',4' to a minimum whilst still accommodating the manual override. Minimising the dead volume in this way increases the responsiveness and stability of the individual pressure regulating valves 2',4' both when used in a conventional bleed air pressure regulation system 1, or the system 1' of Figs. 2 and 6. Accordingly, a pressure regulating valve comprising a manual override cam 18' and a regulating pressure chamber 12' as described alone may be used to improve the responsiveness of a conventional system 1 as previously described.

Aspects of the invention, taken alone or in combination, allow for a more compact, more responsive and more stable pressure regulation system 1', which presents with a reduced weight and reduces the amount of gases (e.g., hot bleed air gases) which are undesirably vented to ambient. The aspects of the invention advantageously work together to reduce the overall size of solenoid valves 24' required, which further reduces the amount of undesirable heat produced by engaging the electrical elements (e.g., electromagnetic coils) of the solenoid valves 24'. The resulting solenoid valves 24' may be integrated directly into the pressure regulating valves 2',4' without adversely affecting the rate of wear due to excessive heating.

## Claims

1. A pressure regulating system comprising:
a pressure regulating valve (2', 4') including a valve inlet (13') and a valve outlet (15');
a regulating piston (16) positioned in a fluid pathway between the valve inlet (13') and the valve outlet (15');
a chamber (12') in fluid communication with the regulating piston (16);
a pressure setting valve (14') in fluid communication with the chamber (12'), the pressure setting valve (14') being configured to vent gas to an ambient environment (30) when a pressure within the chamber (12') exceeds a threshold value;
a solenoid valve (24') in fluid communication with the chamber (12'); and
a sense line (20') in fluid communication with the valve inlet (13') and the solenoid valve (24');
wherein the solenoid valve (24') is positioned in series between the sense line (20') and the chamber (12') and the solenoid valve (24') is configured to move from a first position in which the solenoid valve (24') fluidly connects the chamber (12') with the sense line (20') to a second position in which the solenoid valve (24') fluidly connects the chamber (12') to the ambient environment (30); and
wherein a position of the regulating piston (16) is determined by a difference in pressures between a pressure at the valve outlet (15') and the pressure in the chamber (12'), and such that the position of the regulating piston (16) is configured to regulate a flow of fluid from the valve inlet (13') to the valve outlet (15').

2. A system according to claim 1, wherein:
the regulating piston (16) is configured to move from a closed position to an open position, the closed position fluidly isolating the valve inlet (13') from the valve outlet (15'), and the open position fluidly connecting the valve inlet (13') to the valve outlet (15'), wherein the chamber has a closed volume when the regulating piston (16) is in the closed position; and
the system further comprises a manual override cam (18') positioned within the chamber (12'), the manual override cam (18') having a manual override volume which substantially fills or overlaps the closed volume of the regulating pressure chamber (12').

3. A system according to claim 2, wherein the manual override volume comprises a stroke volume of the cam (18') and the stroke volume fills or overlaps at least 70% of the closed volume of the regulating pressure chamber.

4. A system according to claim 2, wherein the manual override volume comprises a volume of the cam (18') and the volume of the cam fills or overlaps at least 30% of the closed volume of the regulating pressure chamber.

5. A system according to any preceding claim, wherein the pressure setting valve (14') and the solenoid valve (24') are integrated into a body of the pressure regulating valve (2', 4').

6. A system according to any preceding claim, wherein the sense line (20') is directly connected to an inlet chamber (13') of a or the body of the pressure regulating valve (2', 4').

7. A system according to any preceding claim, wherein the pressure regulating valve is a first pressure regulating valve (2'), and the system further comprises:
a fluid inlet (6);
a fluid outlet (8);
a second pressure regulating valve (4') including a second valve inlet (13') and a second valve outlet (15');
a second regulating piston (16) positioned in a fluid pathway between the second valve inlet (13') and the second valve outlet (15');
a second chamber (12') in fluid communication with the second regulating piston (16);
a second pressure setting valve (14') in fluid communication with the second chamber (12'), the second pressure setting valve (14') being configured to vent gas to the ambient environment (30) when a pressure within the second chamber (12') exceeds a second threshold value; and
a second solenoid valve (24') in fluid communication with the second chamber (12');
wherein the first pressure regulating valve (2') and the second pressure regulating valve (4') are arranged in series in a fluid flow path between the fluid inlet (6) and the fluid outlet (8);
wherein the sense line (20') fluidly communicates the valve inlet (13') with the second solenoid valve (24'); and
wherein the second solenoid valve (24') is configured to move from a first position to a second position, the first position fluidly connecting the second chamber (12') with the sense line (20'), and the second position fluidly connecting the second chamber (12') to the ambient environment (30).

8. A system according to claim 7, wherein the threshold value and the second threshold value are different from each other.

9. A method of regulating a pressure of gas for an aircraft bleed air anti-icing system comprising:
providing a first pressure regulating valve (2') between an inlet and an outlet, the first pressure regulating valve (2') comprising a first regulating piston (16) in fluid communication with a first regulating chamber (12'), the first regulating chamber (12') being fluidly coupled with a first pressure setting valve (14, 14');
providing a sense line (20') in fluid communication with the inlet (6) for diverting a portion of gas from the inlet (6) to the first regulation chamber (12');
positioning a first solenoid valve (24, 24') in series between the sense line (20') and the first regulating chamber (12'), wherein the first solenoid valve (24, 24') is configured to move from a first position fluidly connecting the first regulating chamber (12') with the sense line (20'), and a second position fluidly connecting the first regulating chamber (12') to the ambient environment (30); and
configuring the first pressure setting valve to vent gas to an ambient environment (30) when a pressure within the first regulating chamber (12') exceeds a first threshold value,
wherein a position of the first regulating piston (16) is determined by a difference in pressures between a pressure at a valve outlet (15') and the pressure in the first regulating chamber (12'), and such that the position of the first regulating piston (16) is configured to regulate a flow of fluid from a valve inlet (13') to the valve outlet (15').

10. A method according to claim 9, further comprising moving the first solenoid valve (24, 24') to the second position to stop a flow of gas from the inlet (6) to the outlet (8).

11. A method according to claim 9, further comprising:
providing a second pressure regulating valve (4'), comprising a second regulating piston (16) in fluid communication with a second regulating chamber (12'), the second regulating chamber being fluidly coupled with a second pressure setting valve (14, 14') configured to vent gas to the ambient environment (30) when a pressure within the second regulating chamber (12') exceeds a second threshold value, wherein the first pressure regulating valve (2') and the second pressure regulating valve (4') are arranged in series in a fluid flow path between the inlet (6) and the outlet (8);
positioning a second solenoid valve (24, 24') in series between the sense line (20') and the second regulating chamber (12'), wherein the second solenoid valve (24, 24') is configured to move from a first position fluidly connecting the second regulating chamber (12') with the sense line (20'), and a second position fluidly connecting the second regulating chamber (12') to the ambient environment (30); and
moving the first solenoid valve (24, 24') and/or the second solenoid valve (24, 24') to their respective second positions to stop a flow of gas from the inlet (6) to the outlet (8).

## Patentansprüche

1. Druckregelsystem, umfassend:
ein Druckregelventil (2', 4') einschließlich eines Ventileinlasses (13') und eines Ventilauslasses (15');
einen Regelkolben (16), der in einem Fluidpfad zwischen dem Ventileinlass (13') und dem Ventilauslass (15') positioniert ist;
eine Kammer (12') in Fluidverbindung mit dem Regelkolben (16);
ein Druckeinstellventil (14') in Fluidverbindung mit der Kammer (12'), wobei das Druckeinstellventil (14') so konfiguriert ist, dass es Gas an die Umgebung (30) abführt, wenn der Druck innerhalb der Kammer (12') einen Schwellenwert überschreitet;
ein Magnetventil (24') in Fluidverbindung mit der Kammer (12'); und
eine Messleitung (20') in Fluidverbindung mit dem Ventileinlass (13') und dem Magnetventil (24');
wobei das Magnetventil (24') in Reihe zwischen der Messleitung (20') und der Kammer (12') positioniert ist und das Magnetventil (24') so konfiguriert ist, dass es sich von einer ersten Position, in der das Magnetventil (24') die Kammer (12') fluidisch mit der Messleitung (20') verbindet, zu einer zweiten Position bewegt, in der das Magnetventil (24') die Kammer (12') fluidisch mit der Umgebung (30) verbindet; und
wobei eine Position des Regelkolbens (16) durch eine Druckdifferenz zwischen einem Druck an dem Ventilauslass (15') und dem Druck in der Kammer (12') bestimmt wird, und so dass die Position des Regelkolbens (16) so konfiguriert ist, dass sie den Fluidstrom von dem Ventileinlass (13') zu dem Ventilauslass (15') regelt.

2. System nach Anspruch 1, wobei:
der Regelkolben (16) so konfiguriert ist, dass er sich von einer geschlossenen Position in eine offene Position bewegt, wobei die geschlossene Position den Ventileinlass (13') fluidisch von dem Ventilauslass (15') isoliert und die offene Position den Ventileinlass (13') fluidisch mit dem Ventilauslass (15') verbindet, wobei die Kammer ein geschlossenes Volumen aufweist, wenn sich der Regelkolben (16) in der geschlossenen Position befindet; und
das System ferner einen innerhalb der Kammer (12') positionierten manuellen Übersteuerungsnocken (18') umfasst, wobei der manuelle Übersteuerungsnocken (18') ein manuelles Übersteuerungsvolumen aufweist, das das geschlossene Volumen der Regeldruckkammer (12') im Wesentlichen ausfüllt oder überlappt.

3. System nach Anspruch 2, wobei das manuelle Übersteuerungsvolumen ein Hubvolumen des Nockens (18') umfasst und das Hubvolumen mindestens 70 % des geschlossenen Volumens der Regeldruckkammer ausfüllt oder überlappt.

4. System nach Anspruch 2, wobei das manuelle Übersteuerungsvolumen ein Volumen des Nockens (18') umfasst und das Volumen des Nockens mindestens 30 % des geschlossenen Volumens der Regeldruckkammer ausfüllt oder überlappt.

5. System nach einem der vorhergehenden Ansprüche, wobei das Druckeinstellventil (14') und das Magnetventil (24') in einen Körper des Druckregelventils (2', 4') integriert sind.

6. System nach einem der vorhergehenden Ansprüche, wobei die Messleitung (20') direkt mit einer Einlasskammer (13') eines oder des Körpers des Druckregelventils (2', 4') verbunden ist.

7. System nach einem der vorhergehenden Ansprüche, wobei das Druckregelventil ein erstes Druckregelventil (2') ist und das System ferner Folgendes umfasst:
einen Fluideinlass (6);
einen Fluidauslass (8);
ein zweites Druckregelventil (4') einschließlich eines zweiten Ventileinlasses (13') und eines zweiten Ventilauslasses (15');
einen zweiten Regelkolben (16), der in einem Fluidpfad zwischen dem zweiten Ventileinlass (13') und dem zweiten Ventilauslass (15') positioniert ist;
eine zweite Kammer (12') in Fluidverbindung mit dem zweiten Regelkolben (16);
ein zweites Druckeinstellventil (14') in Fluidverbindung mit der zweiten Kammer (12'), wobei das zweite Druckeinstellventil (14') so konfiguriert ist, dass es Gas an die Umgebung (30) abführt, wenn der Druck innerhalb der zweiten Kammer (12') einen zweiten Schwellenwert überschreitet; und
ein zweites Magnetventil (24') in Fluidverbindung mit der zweiten Kammer (12');
wobei das erste Druckregelventil (2') und das zweite Druckregelventil (4') in Reihe in einem Fluidstrompfad zwischen dem Fluideinlass (6) und dem Fluidauslass (8) angeordnet sind;
wobei die Messleitung (20') den Ventileinlass (13') fludisch mit dem zweiten Magnetventil (24') verbindet; und
wobei das zweite Magnetventil (24') so konfiguriert ist, dass es sich von einer ersten Position in eine zweite Position bewegt, wobei die erste Position die zweite Kammer (12') fluidisch mit der Messleitung (20') verbindet und die zweite Position die zweite Kammer (12') fluidisch mit der Umgebung (30) verbindet.

8. System nach Anspruch 7, wobei sich der Schwellwert und der zweite Schwellwert voneinander unterscheiden.

9. Verfahren zum Regeln eines Gasdrucks für ein Zapfluft-Enteisungssystem für Flugzeuge, umfassend:
Bereitstellen eines ersten Druckregelventils (2') zwischen einem Einlass und einem Auslass, wobei das erste Druckregelventil (2') einen ersten Regelkolben (16) in Fluidverbindung mit einer ersten Regelkammer (12') umfasst, wobei die erste Regelkammer (12') fluidisch mit einem ersten Druckeinstellventil (14, 14') gekoppelt ist;
Bereitstellen einer Messleitung (20') in Fluidverbindung mit dem Einlass (6) zum Umleiten eines Teils des Gases von dem Einlass (6) in die erste Regelkammer (12');
Positionieren eines ersten Magnetventils (24, 24') in Reihe zwischen der Messleitung (20') und der ersten Regelkammer (12'), wobei das erste Magnetventil (24, 24') so konfiguriert ist, dass es sich von einer ersten Position, die die erste Regelkammer (12') fluidisch mit der Messleitung (20') verbindet, zu einer zweiten Position bewegt, die die erste Regelkammer (12') fluidisch mit der Umgebung (30) verbindet; und
Konfigurieren des ersten Druckeinstellventils zum Abführen von Gas in die Umgebung (30), wenn der Druck innerhalb der ersten Regelkammer (12') einen ersten Schwellenwert überschreitet,
wobei eine Position des ersten Regelkolbens (16) durch eine Druckdifferenz zwischen einem Druck an dem Ventilauslass (15') und dem Druck in der ersten Regelkammer (12') bestimmt wird, und so dass die Position des ersten Regelkolbens (16) so konfiguriert ist, dass sie den Fluidstrom von einem Ventileinlass (13') zu dem Ventilauslass (15') regelt.

10. Verfahren nach Anspruch 9, das ferner das Bewegen des ersten Magnetventils (24, 24') in die zweite Position umfasst, um den Gasstrom von dem Einlass (6) zu dem Auslass (8) zu stoppen.

11. Verfahren nach Anspruch 9, ferner umfassend:
Bereitstellen eines zweiten Druckregelventils (4'), das einen zweiten Regelkolben (16) in Fluidverbindung mit einer zweiten Regelkammer (12') umfasst, wobei die zweite Regelkammer fluidisch mit einem zweiten Druckeinstellventil (14, 14') gekoppelt ist, das so konfiguriert ist, dass es Gas in die Umgebung (30) abführt, wenn der Druck innerhalb der zweiten Regelkammer (12') einen zweiten Schwellenwert überschreitet, wobei das erste Druckregelventil (2') und das zweite Druckregelventil (4') in Reihe in einem Fluidstrompfad zwischen dem Einlass (6) und dem Auslass (8) angeordnet sind;
Positionieren eines zweiten Magnetventils (24, 24') in Reihe zwischen der Messleitung (20') und der zweiten Regelkammer (12'), wobei das zweite Magnetventil (24, 24') so konfiguriert ist, dass es sich von einer ersten Position, die die zweite Regelkammer (12') fluidisch mit der Messleitung (20') verbindet, in eine zweite Position bewegt, die die zweite Regelkammer (12') fluidisch mit der Umgebung (30) verbindet; und
Bewegen des ersten Magnetventils (24, 24') und/oder des zweiten Magnetventils (24, 24') in ihre jeweiligen zweiten Positionen, um den Gasstrom von dem Einlass (6) zu dem Auslass (8) zu stoppen.

## Revendications

1. Système de régulation de pression comprenant :
une vanne de régulation de pression (2', 4') incluant une entrée de vanne (13') et une sortie de vanne (15') ;
un piston de régulation (16) positionné dans un trajet de fluide entre l'entrée de vanne (13') et la sortie de vanne (15') ;
une chambre (12') en communication fluidique avec le piston de régulation (16) ;
une vanne de réglage de pression (14') en communication fluidique avec la chambre (12'), la vanne de réglage de pression (14') étant configurée pour évacuer du gaz vers un environnement ambiant (30) lorsqu'une pression à l'intérieur de la chambre (12') dépasse une valeur seuil ;
une électrovanne (24') en communication fluidique avec la chambre (12') ; et
une ligne de détection (20') en communication fluidique avec l'entrée de vanne (13') et l'électrovanne (24') ;
dans lequel l'électrovanne (24') est positionnée en série entre la ligne de détection (20') et la chambre (12') et l'électrovanne (24') est configurée pour passer d'une première position dans laquelle l'électrovanne (24') relie fluidiquement la chambre (12') à la ligne de détection (20') à une seconde position dans laquelle l'électrovanne (24') relie fluidiquement la chambre (12') à l'environnement ambiant (30) ; et
dans lequel une position du piston de régulation (16) est déterminée par une différence de pressions entre une pression au niveau de la sortie de vanne (15') et la pression dans la chambre (12'), et de sorte que la position du piston de régulation (16) soit configurée pour réguler un écoulement de fluide de l'entrée de vanne (13') à la sortie de vanne (15').

2. Système selon la revendication 1, dans lequel :
le piston de régulation (16) est configuré pour passer d'une position fermée à une position ouverte, la position fermée isolant fluidiquement l'entrée de vanne (13') de la sortie de vanne (15'), et la position ouverte reliant fluidiquement l'entrée de vanne (13') à la sortie de vanne (15'), dans lequel la chambre présente un volume fermé lorsque le piston de régulation (16) est en position fermée ; et
le système comprend en outre une came de commande manuelle (18') positionnée à l'intérieur de la chambre (12'), la came de commande manuelle (18') présentant un volume de commande manuelle qui remplit ou chevauche sensiblement le volume fermé de la chambre de pression de régulation (12').

3. Système selon la revendication 2, dans lequel le volume de commande manuelle comprend un volume de course de la came (18') et le volume de course remplit ou chevauche au moins 70 % du volume fermé de la chambre de pression de régulation.

4. Système selon la revendication 2, dans lequel le volume de commande manuelle comprend un volume de la came (18') et le volume de la came remplit ou chevauche au moins 30 % du volume fermé de la chambre de pression de régulation.

5. Système selon une quelconque revendication précédente, dans lequel la vanne de réglage de pression (14') et l'électrovanne (24') sont intégrées dans un corps de la vanne de régulation de pression (2', 4').

6. Système selon une quelconque revendication précédente, dans lequel la ligne de détection (20') est directement reliée à une chambre d'entrée (13') d'un ou du corps de la vanne de régulation de pression (2', 4').

7. Système selon une quelconque revendication précédente, dans lequel la vanne de régulation de pression est une première vanne de régulation de pression (2'), et le système comprend en outre :
une entrée de fluide (6) ;
une sortie de fluide (8) ;
une seconde vanne de régulation de pression (4') incluant une seconde entrée de vanne (13') et une seconde sortie de vanne (15') ;
un second piston de régulation (16) positionné dans un trajet de fluide entre la seconde entrée de vanne (13') et la seconde sortie de vanne (15') ;
une seconde chambre (12') en communication fluidique avec le second piston de régulation (16) ;
une seconde vanne de réglage de pression (14') en communication fluidique avec la seconde chambre (12'), la seconde vanne de réglage de pression (14') étant configurée pour évacuer du gaz vers l'environnement ambiant (30) lorsqu'une pression à l'intérieur de la seconde chambre (12') dépasse une seconde valeur seuil ; et
une seconde électrovanne (24') en communication fluidique avec la seconde chambre (12') ;
dans lequel la première vanne de régulation de pression (2') et la seconde vanne de régulation de pression (4') sont agencées en série dans un trajet d'écoulement de fluide entre l'entrée de fluide (6) et la sortie de fluide (8) ;
dans lequel la ligne de détection (20') met l'entrée de vanne (13') en communication fluidique avec la seconde électrovanne (24') ; et
dans lequel la seconde électrovanne (24') est configurée pour passer d'une première position à une seconde position, la première position reliant fluidiquement la seconde chambre (12') à la ligne de détection (20'), et la seconde position reliant fluidiquement la seconde chambre (12') à l'environnement ambiant (30).

8. Système selon la revendication 7, dans lequel la valeur seuil et la seconde valeur seuil diffèrent l'une de l'autre.

9. Procédé de régulation d'une pression d'un gaz pour un système anti-givrage d'air de prélèvement d'aéronef comprenant :
la fourniture d'une première vanne de régulation de pression (2') entre une entrée et une sortie, la première vanne de régulation de pression (2') comprenant un premier piston de régulation (16) en communication fluidique avec une première chambre de régulation (12'), la première chambre de régulation (12') étant couplée fluidiquement à une première vanne de réglage de pression (14, 14') ;
la fourniture d'une ligne de détection (20') en communication fluide avec l'entrée (6) pour dévier une partie de gaz de l'entrée (6) vers la première chambre de régulation (12') ;
le positionnement d'une première électrovanne (24, 24') en série entre la ligne de détection (20') et la première chambre de régulation (12'), dans lequel la première électrovanne (24, 24') est configurée pour passer d'une première position reliant fluidiquement la première chambre de régulation (12') à la ligne de détection (20'), à une seconde position reliant fluidiquement la première chambre de régulation (12') à l'environnement ambiant (30) ; et
la configuration de la première vanne de réglage de pression pour évacuer du gaz vers un environnement ambiant (30) lorsqu'une pression à l'intérieur de la première chambre de régulation (12') dépasse une première valeur seuil,
dans lequel une position du premier piston de régulation (16) est déterminée par une différence de pressions entre une pression au niveau d'une sortie de vanne (15') et la pression dans la première chambre de régulation (12'), et de sorte que la position du premier piston de régulation (16) soit configurée pour réguler un écoulement de fluide depuis une entrée de vanne (13') vers la sortie de vanne (15').

10. Procédé selon la revendication 9, comprenant en outre le déplacement de la première électrovanne (24, 24') à la seconde position pour arrêter un écoulement de gaz de l'entrée (6) vers la sortie (8).

11. Procédé selon la revendication 9, comprenant en outre :
la fourniture d'une seconde vanne de régulation de pression (4'), comprenant un second piston de régulation (16) en communication fluidique avec une seconde chambre de régulation (12'), la seconde chambre de régulation étant couplée fluidiquement à une seconde vanne de réglage de pression (14, 14') configurée pour évacuer du gaz vers l'environnement ambiant (30) lorsqu'une pression à l'intérieur de la seconde chambre de régulation (12') dépasse une seconde valeur seuil, dans lequel la première vanne de régulation de pression (2') et la seconde vanne de régulation de pression (4') sont agencées en série dans un trajet d'écoulement de fluide entre l'entrée (6) et la sortie (8) ;
le positionnement d'une seconde électrovanne (24, 24') en série entre la ligne de détection (20') et la seconde chambre de régulation (12'), dans lequel la seconde électrovanne (24, 24') est configurée pour passer d'une première position reliant fluidiquement la seconde chambre de régulation (12') à la ligne de détection (20') à une seconde position reliant fluidiquement la seconde chambre de régulation (12') à l'environnement ambiant (30) ; et
le déplacement de la première électrovanne (24, 24') et/ou de la seconde électrovanne (24, 24') à leurs secondes positions respectives pour arrêter un écoulement de gaz de l'entrée (6) vers la sortie (8).
